# EUROPEAN PATENT SPECIFICATION

(11) **EP 1 727 850 B1**
(45) Date of publication and mention of the grant of the patent: **22.08.2007**
(21) Application number: 04718283.7
(22) Date of filing: 08.03.2004
(51) Int. Cl.: C08G 65/00, C11D 1/722

(54) **COMPOSITION COMPRISING ALCOHOL ALKOXYLATES AND THEIR USE**
ZUSAMMENSETZUNG ENTHALTEND ALKOHOLALKOXYLATE UND DEREN VERWENDUNG
COMPOSITION COMPORTANT DES ALKOXYLATES D'ALCOOL ET LEUR UTILISATION

(43) Date of publication of application: 06.12.2006
(73) Proprietor: SASOL Germany GmbH, 20537 Hamburg (DE)
(72) Inventor: SCHOENKAES, Udo, 45721 Haltern (DE); GROVE, Cronje, Glenvista, Johannesburg (ZA); MAYER, Ulrich, 44625 Herne (DE); MONTERISI, Francesco, I-20099 Milano (IT)
(74) Representative: Schupfner, Georg
(86) International application number: PCT/EP2004/002367
(87) International publication number: WO 2005/085321

(56) References cited:
- EP-A- 0 882 785
- WO-A-99/18929
- DE-U- 20 303 420
- US-A- 4 280 919

## Description

The present invention relates to low foaming non-ionic surfactants being alcohol alkoxylates comprising at least two different oxyalkylene-groups derivable from a mixture of linear and branched alcohols by alkoxylation and their use.

Non-ionic surfactants are widely used in commercial and household applications where advantage is taken of their valuable performance as wetting agents, their detergency and scouring characteristics, their adaptability for being combined with other types of surfactants and their resistance to hard water conditions. Many of those non-ionic surfactants foam too much for applications the extend of foaming is critical, for example, in automatic dishwashers.

In recent years a number of non-ionic low-foaming surfactants have been developed and used commercially. When the need for foam suppression is of prime importance, the non-ionic surfactants developed to meet this requirement often have been found to sacrifice other desirable characteristics, such as detergency, wetting properties, and biodegradation performance.

Non-ionic surfactants based on ethylene oxide and/or propylene oxide adducts are well known in the art. The known surfactants based on ethoxylates and/or propoxylates of detergent range alcohols often show a number of disadvantages, such as that for many applications the foaming behaviour is in need of improvement.

It has long been known to prepare low-foaming non-ionic surfactants by addition of ethylene oxide and/or propylene oxide to various alcohols, generally long chain monohydric alcohols. Numerous different adducts comprising one or more than one alkoxylate in block and/or random structure have been suggested.

Representative prior art relating to alcohol alkoxylates comprising alkoxylates having block structure are described for example in US 4,410,447, US 3,956,401 and EP 0 882 785-A1.

EP 0 882 785-A1 describes a non-ionic surfactant which has low foaming power, detergency characteristics, and consists of a product having the general formula (I):

RO-(EO)x-(PO)y-(EO)z-H (I)

wherein
- R: represents a linear or branched C12 to C15 alkyl chain,
- EO and PO: are oxyethylene and oxypropylene units respectively, and
- x and z: are stoichiometric indices and are equal to or higher than 1 and
- y: represents a mean number ranging from 0.5 to 6.

The surfactant having general formula (I) however, has a series of limitations, such as that the molecular weight of this product, must not be higher than 1200 otherwise the detergent properties deteriorate or the surfactant cannot be diluted in water in quantities of less than 50 % by weight as with lower concentrations there are significant variations in viscosity. The succession of EO and PO indexes must remain within certain limits to avoid a reduction in detergent properties. These restrictions, and others specified in the test procedure described in EP 0 882 785-A1, make the surfactant having general formula (I) of little interest from an industrial point of view.

U.S. 3,956,401 describes a low foaming, biodegradable non-ionic surfactant which is liquid at room temperature and non-gelling in water solution. The surfactant has the general formula (II):

RO-(CH₂CHR'-O)ₓ-(CH₂-CH₂-O)_{y}-(CH₂-CHR"-O)_{z}-H (II)

wherein
- R: is a linear alkyl group containing 7 to 10 carbon atoms,
- R' and R": are most desirably a methyl group,
- x: is an integer of 1 to 6,
- y: is an integer of 4 to 15 and
- z: is an integer of 4 to 25.

This detergent comprises successively an oxypropylene (PO) block, an oxyethylene (EO) block and an oxypropylene (PO) block bound to the alcohol.

U.S. 4,410,447 also describes a liquid low-foaming non-ionic surfactant, which is also said to have good scouring and/or detergency. This surfactant has the formula (III):

R-O-Ax-B-H (III)

wherein
- R: is a primary alkyl group having from 7 to 11 carbon atoms,
- A: is a oxypropylene group, with the proviso that the total number of carbon atoms in R plus A is 12 to 22,
- x: is an integer from 2 to 15 , and
- B: is a random mixture of oxyethylene and oxypropylene groups, wherein the molar ratio of oxyethylene to oxypropylene in A and B is from 0.2 : 1 to 1.5 : 1 while the molar ratio of oxyethylene to oxypropylene in B is from 1 : 1 to 5 : 1.

This prior art patent, therefore, discloses a detergent which comprises successively a PO block adducted to the alcohol and a random mix of EO and PO units. Respective compositions have a cloud point from about 20 to about 60° C.

Common to all prior art patents is the method to use alcohols having a particular number of carbon atoms in relation to certain amounts of ethylene oxide and/or propylene oxide to obtain products that are liquid and low foaming and have superior wetting and detergency properties. An alternative approach in the patent literature to solve above problem is by modifying the hydrophobe moiety of the surfactant molecule. Such an approach is for example described in US 6,057,284. US 6,057,284 describes a low-foaming non-ionic surfactant which is using isotridecanol as the hydrophobe moiety of the surfactant and has the formula (IV):

RO-(CₘH₂ₘO)x-(CₙHₙ-O)y-H (IV)

wherein
- R: is isotridecyl which is mainly based on primary C13 alkanols having at least 3 branches,
- m: is 2 when n is 3 or 4, or
- m: is 3 or 4 when n is 2, and
- x and y: are independently of each other from 1 to 20, with the proviso that x is not less than y when m=2, and n=3 or 4.

The isotridecanol (isotridecyl alcohol) is of synthetic origin in that it is produced by oligomerization of suitable lower olefins and subsequent oxo reaction (hydroformylation). For instance, isobutylene, 1-butylene, 2-butylene or mixtures thereof can be catalytically trimerized, propylene catalytically tetramerized or 2-methyl-1-pentene catalytically dimerized. The C12 olefins thus obtainable are then converted to the homologous C13 alcohol, for example by means of CO addition and hydration over a suitable catalyst.

However, the underlying alcohol component need not be just pure isotridecanol; homologous mixtures of branched C11 to C14 alkanols comprising isotridecanol as main component are also suitable. Such homologous mixtures are formed under certain conditions in the course of the above-described oligomerisation of lower olefins and subsequent oxo reaction.

The degrees of alkoxylation x and y, which in general are averages, since the alkylene oxide units are usually present in a random distribution with a frequency maximum, are preferably independently of each other from 1.5 to 12. The disclosed isotridecanol block alkoxylates are either ethylene oxide-propylene oxide or ethylene oxide-butylene oxide adducts.

However, known surfactants based on isotridecanol alkoxylates in the field of detergents and cleaners and in the field of chemical-technical applications have a number of disadvantages. Particularly physical and application properties such as surface tension, cleaning power and foam behavior are in need of improvement. Due to the multibranched structure of the alcohol hydrophobe the PO containing isotridecanol adducts often have only unsatisfactory biodegradation properties.

Alcohol(C 1 to C6)alkoxylates of Fischer Tropsch (FT) derived alcohols are for instance known from DE 20303420-U1 (page 4). Furthermore in EP 0 329 670-B1 (page 23) semi-linear surfactants derived from ethoxylated and/or propoxylated alcohols are taught. Semi-linear alcohol alkoxylates are as well disclosed in some of the Procter & Gamble applications directed to mid-chain branched alcohol derivatives of which EP 0 898 607-B1(=WO 97/39089) is an example. However, none of above cited references disclose the specific structure, composition and use of the subject matter of this invention.

Biodegradation is a crucial property of alcohol alkoxylates comprising propylene oxide units, because the incorporation of propylene oxide negatively influences the biodegradability of the molecule. In the technical literature it is described that known alcohol-EO-PO adducts often have only poor biodegradation properties, which often prevents their widespread use. In the journal Tenside Detergents 23(1986),6,p.300-304 Gerike and W. Jasiak state that for many alcohol derivatives biodegradability is often impaired by propoxylation, e.g. in the Coupled Units Test a C12 to C14 fatty alcohol with 4EO units and 5 PO units showed only a C-removal of 49 %.

In Tenside Detergents March/April 1988, p. 86-107 a C12-C18 fatty alcohol alkoxylated with 2.5 EO and 6 PO units is reported to have only a biodegradation of 37 % (Coupled Units Test). The compound did not reach the pass level for ready biodegradability.

As the detergent markets move to more environmental safe products, and more stringent environmental regulations are coming-up, e.g. the new EU Detergent Directive, there is need for low-foaming detergents that offer an improved biodegradation performance, along with good physico-chemical properties and good cleaning abilities.

The known low-foam surfactants do not have a suitable combination of properties of foam suppression, wetting action, biodegradation performance and ability to be formulated which is suitable for all applications.

With the objective of finding a non-ionic surfactant with a low foaming power which does not have the disadvantages of those of the known art it was now surprisingly discovered that by using an alcohol derivable from the hydroformylation of a Fischer-Tropsch olefin, a non-ionic surfactant can be obtained which satisfies the required requisites, that impairs excellent physico-chemical and detergent properties and superior biodegradability with respect to traditional low-foaming surfactants.

The non-ionic surfactant with low foaming power comprises a mixture of alcohol alkoxylates that have the general formula (V):

RO-[(CH₂CHR¹O)ₓ(CH₂CHR²O)_{y}]_{z}-H (V).

The feedstock alcohols R-OH are alcohols that can be prepared by the hydroformylation of olefins that are obtained in the FT process from synthesis gas.

The feedstock alcohols used are a mixture of alcohols ROH, being essentially primary alcohols, consisting of
(a) from more than 20 to 80 % by mass, preferably 40 to 80 % by mass, of alcohols that are linear and aliphatic, preferably saturated, and comprise 8 to 20, preferably 9 to 16, and more preferably 10 to 14 carbon atoms,
(b) from more than 10 to 80 % by mass, preferably 40 to 80 % by mass, of alcohols that are aliphatic, preferably saturated, and comprise
   - 8 to 20, preferably 9 to 16 and more preferably 10 to 14 carbon atoms, and
   - up to 3, preferably 1 or 2, carbon atoms are tertiary carbon atoms whereas
   - none of the two carbon atoms in the 1 or 2 position, preferably none of the three carbon atoms in the 1, 2, or 3 position, relative to the OH group, is a tertiary carbon atom,
   - preferably none of the two, preferably none of the three carbon atoms at the end of the chain are tertiary carbon atoms, and
(c) up to 25 % by mass, preferably 10 to 20 % by mass, of alcohols different to (a) and (b) comprising 8 to 20, preferably 9 to 16, and more preferably 10 to 14 carbon atoms,
wherein for all alcohols according to (a), (b) and (c)
- at least 80 %, preferably at least 95 %, of the tertiary carbon atoms, related to the total of all tertiary carbon atoms in the alcohol mixture, are not directly adjacent,
- the alcohols according to (a), (b) and (c) supplement one another essentially to 100 % by mass and
wherein for the alcohols (b) and (c) that may comprise alkyl branching
- at least 80 %, preferably at least 95 %, of the alkyl branches are methyl and/or ethyl.

Such alcohol mixtures are available on the market and sold by SASOL Ltd, South Africa as SAFOL^{™} 23, SAFOL^{™} 25, and SAFOL^{™} 45. These alcohols are derived from the hydroformylation of C11 to C12 olefins, C13 to C14 olefins and their mixtures respectively obtained from high temperature Fischer-Tropsch reaction.

Most preferably a C12 to C13 Fischer-Tropsch alcohol (SAFOL^{™} 23 alcohol) is used. SAFOL 23 is a primary alcohol and consists of ca. 50 % by mass linear alcohol isomers, ca. 30 % mono-methyl branched alcohol isomers and ca. 20 % by mass by mass of other isomeric alcohols.

R¹, R², X, y and z in general formula V:

RO-[(CH₂CHR¹O)ₓ(CH₂CHR²O)_{y}]_{z}-H (V).

are defined as follows:
- R¹ and R²: are independent of one another and optionally different for each z, selected from the group consisting of:
H and linear aliphatic C1 to C3 hydrocarbons and preferably are methyl and/or ethyl with the proviso that R¹ and R² are not the same for one z,
- x and y: are independent of one another and optionally different for each z values from 2 to 10, and
- z: has a value of from to 5.

Further wherein R¹ is H, x preferably falls in the range from 1 to 10, more preferably in the range 1, to 6, with R² methyl, ethyl or propyl and y preferably in the range from 1 to 10, more preferably in the range 1 to 6. z is preferably in the range 1 to 2, more preferably 1.

Alternatively when R¹ is methyl, ethyl or propyl, x preferably falls in the range from 1 to 10, more preferably in the range 2 to 6, with R² equals H and y preferably in the range from 1 to 10, more preferably in the range 2 to 6. z is preferably in the range 1 to 2, more preferably 1.

The non-ionic surfactant having the general formula (V) can be prepared with known techniques, for example by reacting an alcohol R-OH with ethylene oxide and propylene oxide or butylene oxide, alternating blocks of the former with blocks of the latter, in the presence of a base catalyst selected from the hydroxides of alkaline or earth-alkaline metals or from mixed oxides of magnesium-zinc, magnesium-tin, magnesium-titanium or magnesium-antimony, or acids like H₂SO₄, or Lewis acids like TiCl₄. Also catalysts based on a mixture of calcium hydroxide, dispersed in an alcohol ethoxylate medium, partially neutralized with 2-ethylhexanoic acid and sulfuric acid and also catalysts based on a mixture of calcium hydroxide, dispersed in an alcohol ethoxylate medium, partially neutralized with 2-phenylhexanoic acid and sulfuric acid and mixed with aluminium alkoxide, can be used. More preferred are the catalysts KOH, NaOH, and MeONa. The catalysts are preferably employed at amounts of about 0.1 mol % to about 3.0 mol %, with 0.2 mol % to about 1.0 mol % being more preferred.

The Fischer-Tropsch (FT) process is a process for the synthesis of hydrocarbons. Synthesis gas, a mixture of hydrogen and carbon monoxide, is reacted in the presence of an iron or cobalt catalyst. An important source of the hydrogen-carbon monoxide gas mixture is the gasification of coal. The process is named after F. Fischer and H. Tropsch, the German coal researchers who discovered it in 1923.

In the Fischer-Tropsch process, synthesis gas (carbon monoxide and hydrogen) obtained from gasification of coal or reforming of natural gas, is reacted over a Fischer Tropsch catalyst to produce a mixture of hydrocarbons ranging from methane to waxes and smaller amounts of oxygenates.

In a low temperature Fischer-Tropsch reaction, the reaction takes place in a slurry bed reactor or fixed bed reactor, preferably a slurry bed reactor, at a temperature in the range of 160°C to 280°C, preferably 210°C to 260°C, and a pressure in the range of 18 to 50 bar, preferably between 20 to 30 bar, in the presence of a catalyst. The catalyst may include iron, cobalt, nickel or ruthenium. However, a cobalt-based catalyst is preferred for the low temperature reaction. Usually, the cobalt catalyst is supported on an alumina support. The hydrocarbon condensation product includes olefins and paraffins in the C4 to C26 range, and oxygenates including alcohols, esters, aldehydes, ketones, and acids.

In a high temperature Fischer-Tropsch reaction, the reaction takes place in a two phase reactor containing gas and catalyst, preferably a fluidized bed reactor, at a temperature range of 320°C to 350°C, preferably 330°C to 350°C, and a pressure in the range of 18 to 50 bar, preferably between 20 to 30 bar. The catalyst comprises iron promoted with alkali, prepared in existing commercial applications from fused magnetite. The iron oxide catalyst precursor is at least partially reduced to the metal prior to loading it into the synthesis reactor and it typically is subjected to reactions and phase changes during operation at synthesis conditions that change the catalyst structure and composition.

The products typically comprises linear and branched olefin products.

Particulars of the process useful for the production of hydrocarbons that may be used as starting material to obtain the desired alcohol mixture of the present invention are as well described in Dry, M E, in "Catalysis-Science and Technology", Anderson, J R and Boudart, M (eds.), Springer-Verlag, Berlin, 159 (1981).

### USE AND APPLICATION

The alcohol alkoxylates of the present invention can be used as low-foaming, foam-suppressing, and anti-foam surfactants. They are suitable, in particular, for detergents and cleaners, and for industrial and chemical-technical applications. Low-foaming refers to the fact that respective compounds have a lower tendency to form foam compared to equivalent compounds having the same structure with respect to the alcohol group and the same number of alkoxy groups but being alkoxylated with ethylenoxide only.

The disclosed FT alcohol alkoxylates can be applied in a wide range of household and industrial and institutional (I&I) cleaning formulations. Examples of typical applications include household and I&I laundry detergents, household and I&I machine dish wash, household and I&I rinse aids, household and I&I hard surface cleaning, car cleaners, bottle washing, metal cleaning, spray cleaning, machine cleaning (e.g. floor cleaning machines), and cleaners for breweries and butcheries.

The present invention likewise provides detergent and cleaning formulations which, as well as the customary constituents, contain the alcohol alkoxylates of formula (V) in concentrations of up to 50 %, preferably from 0.1 to 20 %, more preferably 0.1 to 15 % by weight.

Besides, in the field of detergents and cleaners the claimed alcohol alkoxylates can be used in textile processing, leather processing, metal processing, cooling lubricants, water treatment, fermentation, paper processing, latex paints, crop protection formulations, and industrial processing.

In addition to the alkoxylates based on FT alcohols the compositions and formulations according to the present invention may contain also other anionic, nonionic and cationic surfactants, or mixtures thereof. Customary surfactants that can be used with the FT alcohol alkoxylates of this invention are, for instance, described by Kurt Kosswig in Ullmann's Encyclopedia of Industrial Chemistry, Vol. A25 (1994), p. 747-817.

Suitable anionic surfactants that can be present include sulfonates and sulphates. Examples of sulfonate-type surfactants include linear alkylbenzene sulfonates, e.g. C10- to C13- LAS, C13- to C17- paraffin sulfonates, and ester sulfonates having chain lengths of 12 to 20 C atoms. Examples of sulfate-type surfactants include the monoesters of sulfuric acid with fatty alcohols of synthetic and natural origin, such as coconut fatty alcohol, tallow fatty alcohol, oleyl alcohol, or C10 to C20 oxo alcohols. Fatty alcohol ether sulfates, such as lauryl ether sulfate, C12 to C13 alcohol ether sulfates, C12 to C15 alcohol ether sulfates, or butylglycol sulfate, may also be used.

Other suitable anionic surfactants are soaps, including saturated fatty acid soaps, such as the alkali metal or alkanolamine soaps of lauric acid, myristic acid, palmitic acid and stearic acid. Soap mixtures derived from natural fatty acids, such as coconut, palm kernel or tallow fatty acids, are preferred.

Suitable nonionic surfactants include adducts of ethylene oxide and/or propylene oxide with alkylphenols, oxo alcohols or natural or Ziegler alcohols, fatty acids, fatty amines and fatty acid amides. The adducts of 3 to 15 mol of ethylene oxide with coconut and tallow fatty alcohols, with oleyl alcohol or with synthetic alcohols having 8 to 18 C atoms are particularly preferred. Also alcohol-EO-POs already on the market, as they are sold under the trade names Biodac® and Marlox® (Sasol), Plurafac® LF (BASF) and Dehypon® LS (Cognis), and other suppliers can be used. Besides this also high-ethoxylated tallow fatty alcohols or fatty alcohol ethoxylates that are end-capped by alkyl groups can be used as additional wetting agents. Surfactants of the type comprising the C8 to C18-alkylpolyglucosides and amine oxides may also be used.

It is furthermore possible to use cationic surfactants and amphoteric products, such as ampholytes and betaines.

### EXAMPLES

For illustrative and non-limiting purposes, non-ionic surfactants having the general formula (V) were prepared wherein R is a mixture of C12 to C13 linear and branched alkyl with R₁ = H and R₂ = CH₃ and CH₂ CH₃ and the index x was between 1 and 10, and y between 1 and 6 with z = 1.

RO-[(CH₂CHR₁O)ₓ(CH₂CHR₂O)_{y}]_{z}-H (V)

297 grams of C12 to C13 FT alcohol (SAFOL^{™} 23 alcohol) were placed in an autoclave into which 3.9 grams of potassium hydroxide (50 % in water) were charged. The autoclave was then heated to 150 °C under vacuum to dehydrate the reaction mixture. The temperature was then brought to 160 °C, and 330 grams of ethylene oxide were slowly fed. At the end of the reaction of the ethylene oxide, when the pressure drop had been stabilized, 350 grams of propylene oxide were fed. At the end of the reaction the product was cooled to 80 °C and neutralized up to pH 6 with acetic acid.

Physical-chemical characteristics of alcohol-EO-POs of examples of the present invention prepared according to the above mentioned method are given in Table 1.

**TABLE 1**

| ***Product*** | ***Appearance*** | ***Cloud point*** | ***Wetting power*** | ***Foaming power*** |
|---|---|---|---|---|
| | at 20 °C | [°C] | [sec] | [cm] |
| C12-C13 FT alcohol+ 2EO+2PO | Liquid | 41 | > 200 | 1 |
| C12-C13 FT alcohol+ 2EO+4PO | Liquid | 39 | 100 | 1 |
| C12-C13 FT alcohol+ 5EO+4PO | Liquid | 48 | 15 | 3 |
| C12-C13 FT alcohol+ 5EO+5PO | Liquid | 40 | 15 | 2 |
| C12-C13 FT alcohol+ 5EO+6PO | Liquid | 35 | 15 | 1 |

The cloud point was determined in butyl diglycol by using the method DIN EN 1890. This involved determining the temperature above which the solution turns cloudy. The lower the cloud temperature, the lower the foaming tendency.

The wetting power was determined at 20 °C by method DIN EN 1772. The wetting effect corresponds to the time taken for a cotton disk to sink in aqueous solution. The shorter the sinking time, the better the wetting efficiency.

The foaming power was determined at 40 °C under high pressure conditions with a 1 g/l active surfactant solution in a foam-test cabin. The test apparatus consists of a reservoir for the surfactant solution, a pump and a test cabin. The foam is generated by spraying the surfactant solution with pressure onto a wire netting (placed in the cabin) and the foam height in the cabin is determined by a graduation (in cm). In this test low-foaming alcohol-EO-POs from the market typically showed foam heights of 1 to 10 cm, regular alcohol ethoxylates with 7 moles EO produce foam heights of more than 20 cm.

In the following properties of the non-ionic surfactants of the present invention are compared to typical traditional surfactants based on a linear alcohol (Table 2).

**TABLE 2**

| ***Product*** | ***Wetting power [sec]*** | ***Foaming power [cm]*** |
|---|---|---|
| C12-C13 FT alcohol-5EO-4PO | 15 | 3 |
| Linear C12-C14 alcohol-5EO-4PO | 20 | 3 |

Compared to the traditional linear C12 to C14 alcohol-5EO-4PO from the market the C12-C13-FT alcohol-5EO-4PO of the present invention had a better wetting performance.

Biodegradability tests carried out on C12 to C13 FT alcohol-2EO-4PO, C12-C13 FT alcohol-5EO-4PO and C12-C13 FT alcohol-5EO-6PO gave excellent results with respect to the total biodegradability, and the given products turned out to be readily biodegradable.

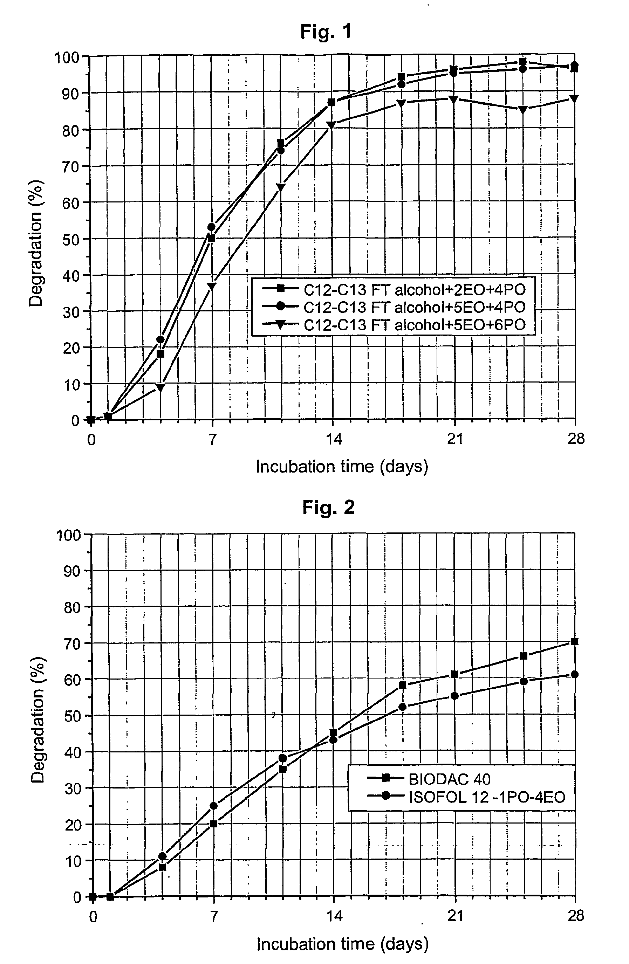

Figure 1 shows the biodegradation performance of C12-C13-FT alcohol-EO-POs (CO₂ Evolution Test on "ready" biodegradability according to OECD 301 B).

All three tested FT alcohol-EO-POs reached the pass level of 60 % for ready biodegradability within the 10-day window:
- C12-C13 FT alcohol+2EO+4PO reached 83 % at the end of the 10-day window
- C12-C13 FT alcohol+SEO+4PO reached 79 % at the end of the 10-day window
- C12-C13 FT alcohol+5EO+6PO reached 81 % at the end of the 10-day window.

Therefore all three tested products can be termed "readily" biodegradable.

The biodegradation of the FT alcohol-EO-PO derivatives was compared with traditional alcohol-EO-POs (Figure 2, CO₂ Evolution Test on "ready" biodegradation according to OECD 301 B).

Biodac® 40 is an alcohol EO-PO based on a linear Ziegler-alcohol, with an alkyl chain having 10 carbon atoms, ethoxylated with 4 moles of ethylene oxide and propoxylated with 2 mole of propylene oxide.

Isofol® 12-1PO-4EO is based on a branched Guerbet alcohol, with an alkyl chain having 12 carbon atoms, propoxylated with 1 mole propylene oxide and then ethoxylated with 4 moles of ethylene oxide.

Compared to the C12-C13 FT alcohol-EO-POs of the present invention Biodac 40 and Isofol® 12-1PO-4EO showed a lower biodegradation level at the end of the 28 day period. Both Biodac® 40 and Isofol 12-1PO-4EO did not reach the 60 % level for "ready" biodegradation:
- Biodac® 40 reached 48 % at the end of the 10-day window
- Isofol® 12-1PO-4EO reached 42 % at the end of the 10-day window.

Therefore both products do not fulfil the 10-day window criterium and are not classified as "ready" biodegradable.

Typical formulation examples to use the alcohol alkoxylates of this invention in machine dish wash powders and in liquid rinse aids with low-foaming characteristics are given in Table 3 (Dish washing detergents) and Table 4 (Rinse aids).

The given formulations showed a low-foaming characteristic when applied in dishwashing machines and a good cleaning and rinsing performance.

**TABLE 3**

| ***Automatic Dishwashing Powders*** | |
|---|---|
| Example A (phosphate-free powder) | |
| Sodium disilicate | 25 % |
| Sodium citrate dihydrate | 35 % |
| C12-13 FT alcohol-5EO-4PO | 2.5 % |
| Polycarboxylate | 5 % |
| Sodium perborate mono hydrate | 15% |
| Tetraacetylethylenediamine (TAED) | 4 % |
| Enzymes | 4 % |
| Sodium sesquicarbonate | to 100 |

| Example B (powder based on phosphate) | |
|---|---|
| C12-C13-FT alcohol-5EO-4PO | 1 % |
| Sodium tripolyphosphate | 40 % |
| Sodium metasilicate | 35% |
| Sodium carbonate | 22 % |
| Sodium dichlor isocyanurate | 2 % |

**TABLE 4**

| ***Rinse aids for machine dishwash*** | |
|---|---|
| Example C | |
| C12-C13 FT alcohol-5EO-4PO | 10 % |
| C16-C18 fatty alcohol-25EO | 5 % |
| (MARLIPAL® 1618/25, Sasol Germany) | |
| Citric acid | 3 % |
| Isopropanol | 15 % |
| Water | to 100 |

| Example D | |
|---|---|
| C12-C13 FT alcohol-5EO-4PO | 10 % |
| Sodium cumene sulfonate*, 40 % | 10 % |
| Citric acid | 5 % |
| Water | to 100 |

| | |
|---|---|
| * (Na Cumene sulfonate 40, Sasol Germany) | |

## Claims

1. Composition comprising alcohol alkoxylates of the general formula (V).
RO[(CH₂CHR¹O)ₓ(CH₂CHR²O)_{y}]_{z}-H (V)
wherein the residue RO is derivable from a mixture of alcohols ROH, being essentially primary alcohols, essentially consisting of
(a) from more than 20 to 80 % by mass of alcohols that are linear and aliphatic and comprise 8 to 20 carbon atoms,
(b) from more than 10 to 80 % by mass of alcohols that are aliphatic and comprise
- 8 to 20 carbon atoms, and
- 1, 2 or 3 carbon atoms are tertiary carbon atoms whereas
- none of the two carbon atoms in the 1 or 2 position relative to the OH group is a tertiary carbon atom and
(c) up to 25 % by mass of alcohols are different to (a) and (b) and comprise 8 to 20 carbon atoms,
wherein for all alcohols according to (a), (b) and (c)
- at least 80 % of the tertiary carbon, atoms related to the total of all tertiary carbon atoms in the alcohol mixture are not directly adjacent,
- the alcohols according to (a), (b) and (c) supplement one another essentially to 100 % by mass and
wherein for the alcohols (b) and (c) that may comprise alkyl branching
- at least 80 % of the alkyl branches are methyl and/or ethyl and
R¹ and R² are independent of one another and optionally different for each z, selected from the group consisting of
H and linear aliphatic C1 to C3 hydrocarbons with the proviso that R¹ and R² are not the same for one z,
x and y have independent of one another and optionally different for each z values from 2 to 10 and
z has a. value of from 1 to 5.

2. Composition according to claim 1 wherein
x is from 2 to 6,
y is from 2 to 6,
z is from 1 to 2, preferably 1, and
R¹ is H and R² is methyl, ethyl or propyl or
R¹ is methyl, ethyl or propyl and R² is H.

3. Composition according to at least one of the preceding claims wherein the alcohol mixture comprise independently of each other
- 40 to 80 % by mass of alcohol (a),
- 40 to 80 % by mass of alcohol (b) and/or
- 10 to 20 % by mass of alcohol (c).

4. Composition according to at least one of the preceding claims wherein alcohols (a), (b) and/or (c) comprise independently from each other 9 to 16 and more preferably 10 to 14 carbon atoms and in particular 12 to 13 carbon atoms.

5. Composition according to at least one of the preceding claims wherein for alcohols (b) 1 or 2 carbon atoms are tertiary carbon atoms and independently none of the three carbon atoms in the 1, 2 or 3 position relative to the OH group is a tertiary carbon atom.

6. Composition according to at least one of the preceding claims wherein for alcohols (b) none of the two, preferably none of the three, carbon atoms at the end of the chain are tertiary carbon atoms.

7. Composition according to at least one of the preceding claims wherein at least 95 % of the tertiary carbon atoms relative to the total of all tertiary carbon atoms in the alcohol mixture are not directly adjacent.

8. Composition according to at least one of the preceding claims, wherein at least one x or y is equal to or greater than 2 and preferably x and y are from 2 to 10 .

9. Composition according to at least one of the preceding claims wherein the alcohols ROH are derivable from olefins obtainable by Fisch-Tropsch Synthesis via hydroformylation.

10. Composition according to any of the preceding claims wherein the composition comprises the alcohol alkoxylates of claim 1 in concentrations of up to 50 %, preferably from 0.1 to 20 % and more preferably 0.2 to 15 % by weight.

11. Composition according to at least one of the preceding claims wherein the composition additionally comprises other anionic, nonionic and/or cationic surfactants, or mixtures thereof.

12. Composition according to claim 11 wherein the additional anionic surfactants comprise sulfonates and/or sulfates and in particular C9 to C16 alkylbenzolsulfonates, C12 to C18 alkyl sulfates, C12 to C15 alcohol ether sulfates or butylglycol sulfate and/or saturated C12 to C18 fatty acid soaps.

13. Composition according to claim 11 wherein the additional nonionic surfactants comprises adducts of ethylene oxide and/or propylene oxide, of alkylphenols, fatty acids, fatty amines and/or fatty acid amides and/or adducts of ethylene oxide to C8 to C18 fatty alcohols , preferably of 3 to 15 mols of ethylene oxide.

14. Use of the composition according to at least one of the preceding claims as low-foaming, foam-suppressing, and anti-foam surfactants.

15. Use of the composition according to at least one of the claims 1 to 13 in laundry detergents, in machine dish wash detergents, in rinse aids, in hard surface cleaning detergents, in car cleaners, in bottle washing detergents, in metal cleaning, as textile or leather additives and/or in spray cleaning.

## Patentansprüche

1. Zusammensetzung, umfassend Alkoholalkoxylate der allgemeinen Formel (V)
RO[(CH₂CHR¹O)ₓ(CH₂CHR²O)_{y}]_{z}-H (V)
wobei der Rest RO von einem Gemisch von Alkoholen ROH ableitbar ist, die im Wesentlichen primäre Alkohole sind, die im Wesentlichen bestehen aus
(a) mehr als 20 bis 80 Masse-% Alkoholen, die linear und aliphatisch sind und 8 bis 20 Kohlenstoffatome umfassen
(b) mehr als 10 bis 80 Masse-% Alkoholen, die aliphatisch sind und
- 8 bis 20 Kohlenstoffatome umfassen, und
- 1, 2 oder 3 Kohlenstoffatome tertiäre Kohlenstoffatome sind, wohingegen
- keines der beiden Kohlenstoffatome in 1- oder 2-Position relativ zu der OH-Gruppe ein tertiäres Kohlenstoffatom ist und
(c) bis zu 25 Masse-% Alkohole verschieden von (a) und (b) sind und 8 bis 20 Kohlenstoffatome umfassen,
wobei für sämtliche Alkohole nach (a), (b) und (c)
- mindestens 80 % der tertiären Kohlenstoffatome, bezogen auf die Gesamtheit aller tertiärer Kohlenstoffatome in dem Alkoholgemisch, nicht direkt nebeneinander liegen,
- die Alkohole nach (a), (b) und (c) im Wesentlichen einander auf 100 Masse-% ergänzen und
wobei für die Alkohole (b) und (c), die Alkylverzweigung enthalten können
- mindestens 80 % der Alkylverzweigungen Methyl- und/oder Ethylverzweigungen sind und
R¹ und R² unabhängig voneinander sind und gegebenenfalls für jedes z verschieden sind, ausgewählt aus der Gruppe, bestehend aus
H und linearen aliphatischen C₁-C₃-Kohlenwasserstoffen, mit der Maßgabe, dass R¹ und R² für ein z nicht gleich sind,
x und y unabhängig voneinander, und gegebenenfalls für jedes z verschieden, Werte von 2 bis 10 besitzen und
z einen Wert von 1 bis 5 besitzt.

2. Zusammensetzung nach Anspruch 1, wobei
x 2 bis 6 ist,
y 2 bis 6 ist,
z 1 bis 2 ist, vorzugsweise 1 ist und
R¹ H ist und R² Methyl, Ethyl oder Propyl ist oder
R¹ Methyl, Ethyl oder Propyl und R² H ist.

3. Zusammensetzung nach mindestens einem der vorhergehenden Ansprüche, wobei das Alkoholgemisch unabhängig voneinander
- 40 bis 80 Masse-% Alkohol (a),
- 40 bis 80 Masse-% Alkohol (b) und/oder
- 10 bis 20 Masse-% Alkohol (c) enthält.

4. Zusammensetzung nach mindestens einem der vorhergehenden Ansprüche, wobei die Alkohole (a), (b) und/oder (c) unabhängig voneinander 9 bis 16 und stärker bevorzugt 10 bis 14 Kohlenstoffatome und insbesondere 12 bis 13 Kohlenstoffatome umfassen.

5. Zusammensetzung nach mindestens einem der vorhergehenden Ansprüche, wobei für die Alkohole (b) 1 oder 2 Kohlenstoffatome tertiäre Kohlenstoffatome sind und unabhängig keines der 3 Kohlenstoffatome in der 1-, 2- oder 3-Position relativ zu der OH-Gruppe ein tertiäres Kohlenstoffatom ist.

6. Zusammensetzung nach mindestens einem der vorhergehenden Ansprüche, wobei für die Alkohole (b) keiner der beiden, vorzugsweise keiner der 3 Kohlenstoffatome am Ende der Kette tertiäre Kohlenstoffatome sind.

7. Zusammensetzung nach mindestens einem der vorhergehenden Ansprüche, wobei mindestens 95 % der tertiären Kohlenstoffatome, bezogen auf die Gesamtheit aller tertiären Kohlenstoffatome in dem Alkoholgemisch, nicht direkt nebeneinander liegen.

8. Zusammensetzung nach mindestens einem der vorhergehenden Ansprüche, wobei mindestens ein x oder y gleich oder größer als 2 ist und vorzugsweise x und y 2 bis 10 sind.

9. Zusammensetzung nach mindestens einem der vorhergehenden Ansprüche, wobei die Alkohole ROH von Olefinen ableitbar sind, die durch Fischer-Tropsch-Synthese über Hydroformylierung erhältlich sind.

10. Zusammensetzung nach einem der vorhergehenden Ansprüche, wobei die Zusammensetzung die Alkoholalkoxylate nach Anspruch 1 in Konzentrationen von bis zu 50 Gew.-%, vorzugsweise von 0,1 bis 20 % und stärker bevorzugt von 0,2 bis 15 Gew.-% enthält.

11. Zusammensetzung nach mindestens einem der vorhergehenden Ansprüche, wobei die Zusammensetzung zusätzlich andere anionische, nicht ionische und/oder kationische oberflächenaktive Mittel oder Gemische davon umfasst.

12. Zusammensetzung nach Anspruch 11, wobei die zusätzlichen anionischen oberflächenaktiven Mittel Sulfonate und/oder Sulfate und insbesondere C₉- bis C₁₆-Alkylbenzolsulfonate, C₁₂- bis C₁₈-Alkylsulfate, C₁₂- bis C₁₅-Alkoholethersulfate oder Butylglycolsulfat und/oder gesättigte C₁₂- bis C₁₈-Fettsäureseifen umfassen.

13. Zusammensetzung nach Anspruch 11, wobei die zusätzlichen nicht ionischen oberflächenaktiven Mittel Addukte von Ethylenoxid und/oder Propylenoxid, von Alkylphenolen, Fettsäuren, Fettaminen und/oder Fettsäureamiden und/oder Addukte von Ethylenoxid an C₈- bis C₁₈-Fettalkohole, vorzugsweise von 3 bis 15 Mol Ethylenoxid, umfassen.

14. Verwendung der Zusammensetzung nach mindestens einem der vorhergehenden Ansprüche als schaumarme, schaumunterdrückende und schaumhemmende oberflächenaktive Mittel.

15. Verwendung der Zusammensetzung nach mindestens einem der Ansprüche 1 bis 13 in Waschpulvern, Spülmaschinendetergenzien, in Spülhilfen, in Hartflächen-Reinigungsdetergenzien, in Autowaschmitteln, in Flaschenspülmitteln, bei Metallreinigern, als Textil- oder Leder-Additive und/oder beim Sprühreinigen.

## Revendications

1. Composition comprenant des alcoxylates d'alcool de formule générale (V)
RO[(CH₂CHR¹O)ₓ(CH₂CHR²O)_{y}]_{z}-H (V)
dans laquelle le résidu RO est dérivable d'un mélange d'alcools ROH, qui sont pour l'essentiel des alcools primaires, se composant essentiellement de :
(a) plus de 20 à 80 % en poids des alcools qui sont linéaires et aliphatiques et comprennent 8 à 20 atomes de carbone,
(b) plus de 10 à 80 % en poids des alcools qui sont aliphatiques et comprennent :
- 8 à 20 atomes de carbone, et
- 1, 2 ou 3 atomes de carbone sont des atomes de carbone tertiaire alors que
- aucun des deux atomes de carbone en position 1 ou 2 par rapport au groupe OH n'est un atome de carbone tertiaire et
(c) jusqu'à 25 % en poids des alcools sont différents de (a) et (b) et comprennent 8 à 20 atomes de carbone,
où pour tous les alcools selon (a), (b) et (c)
- au moins 80 % des atomes de carbone tertiaire par rapport au total de tous les atomes de carbone tertiaire dans le mélange d'alcools ne sont pas directement adjacents,
- les alcools selon (a), (b), et (c) s'additionnent pour arriver sensiblement à 100 % en poids, et
où pour les alcools (b) et (c) qui peuvent comprendre une ramification alkyle
- au moins 80 % des ramifications alkyles sont méthyles et/ou éthyles et
R¹ et R² sont indépendants l'un de l'autre et, le cas échéant, différents pour chaque z, choisis dans le groupe constitué de
H et des hydrocarbures en C₁ à C₃ aliphatiques linéaires à la condition que R¹ et R² ne soient pas identiques pour un z,
x et y ont, indépendamment l'un de l'autre et étant, le cas échéant, différents pour chaque z, des valeurs de 2 à 10 et
z a une valeur de 1 à 5.

2. Composition selon la revendication 1, dans laquelle
x est un nombre de 2 à 6,
y est un nombre de 2 à 6,
z est un nombre de 1 à 2, de préférence 1, et
R¹ est H et R² est méthyle, éthyle ou propyle ou
R¹ est méthyle, éthyle ou propyle et R² est H.

3. Composition selon au moins l'une des revendications précédentes, dans laquelle le mélange d'alcools comprend, indépendamment l'un de l'autre,
- 40 à 80 % en poids d'alcool (a),
- 40 à 80 % en poids d'alcool (b) et/ou
- 10 à 20 % en poids d'alcool (c).

4. Composition selon au moins l'une des revendications précédentes, dans laquelle les alcools (a), (b) et/ou (c) comprennent, indépendamment l'un de l'autre, 9 à 16, et plus préférentiellement 10 à 14 atomes de carbone et en particulier 12 à 13 atomes de carbone.

5. Composition selon au moins l'une des revendications précédentes, dans laquelle, pour les alcools (b), 1 à 2 atomes de carbone sont des atomes de carbone tertiaire et, indépendamment, aucun des trois atomes de carbone en position 1, 2 ou 3 par rapport au groupe OH n'est un atome de carbone tertiaire.

6. Composition selon au moins l'une des revendications précédentes, dans laquelle, pour les alcools (b), aucun des deux, de préférence aucun des trois, atomes de carbone à la fin de la chaîne n'est un atome de carbone tertiaire.

7. Composition selon au moins l'une des revendications précédentes, dans laquelle au moins 95 % des atomes de carbone tertiaire par rapport au total de tous les atomes de carbone tertiaire dans le mélange d'alcools ne sont pas directement adjacents.

8. Composition selon au moins l'une des revendications précédentes, dans laquelle au moins un x ou y est égal ou supérieur à 2 et, de préférence, x et y ont une valeur allant de 2 à 10.

9. Composition selon au moins l'une des revendications précédentes, dans laquelle les alcools ROH sont dérivables des oléfines pouvant être obtenues par la synthèse de Fischer-Tropsch par hydroformylation.

10. Composition selon l'une des revendications précédentes, dans laquelle la composition comprend les alcoxylates d'alcool de la revendication 1 en des concentrations allant jusqu'à 50 %, de préférence de 0,1 à 20 % et plus préférentiellement de 0,2 à 15 % en poids.

11. Composition selon au moins l'une des revendications précédentes, dans laquelle la composition comprend en plus d'autres tensioactifs anioniques, non ioniques et/ou cationiques, ou leurs mélanges.

12. Composition selon la revendication 11, dans laquelle les tensioactifs anioniques additionnels comprennent les sulfonates et/ou sulfates et en particulier les alkylbenzènesulfonates en C₉ à C₁₆, les alkylsulfates en C₁₂ à C₁₈, les éther-sulfates d'alcool en C₁₂ à C₁₅ ou le sulfate de butylglycol et/ou les savons d'acides gras en C₁₂ à C₁₈ saturés.

13. Composition selon la revendication 11, dans laquelle les tensioactifs non ioniques additionnels comprennent les produits d'addition de l'oxyde d'éthylène et/ou de l'oxyde de propylène, des alkylphénols, les acides gras, les amines grasses et/ou les amides d'acides gras et/ou les produits d'addition de l'oxyde d'éthylène à des alcools gras en C₈ à C₁₈, de préférence de 3 à 15 moles d'oxyde d'éthylène.

14. Utilisation de la composition selon au moins une des revendications précédentes en tant que tensioactifs faiblement moussants, suppresseurs de mousse et antimousse.

15. Utilisation de la composition selon au moins une des revendications 1 à 13 dans des détergents de lessive, dans des détergents de lavage de la vaisselle en machine, dans des auxiliaires de rinçage, dans des détergents de nettoyage des surfaces dures, dans des détergents pour véhicule, dans des détergents de lavage de bouteilles, dans le nettoyage des métaux, en tant qu'additifs textile ou cuir et/ou dans le nettoyage par pulvérisation.
